# EUROPEAN PATENT APPLICATION

(11) **EP 3 514 996 A1**
(43) Date of publication of application: **24.07.2019**
(21) Application number: 17859524.5
(22) Date of filing: 13.10.2017
(51) Int. Cl.: H04L 1/00, H04W 74/00

(54) **METHOD AND APPARATUS FOR ENCODING AND DECODING DATA IN MULTIPLE RAT SYSTEM**

(30) Priority: 13.10.2016 KR 20160133089
(71) Applicant: Samsung Electronics Co., Ltd., Suwon-si, Gyeonggi-do 16677 (KR)
(72) Inventor: KANG, Hyunjeong, Suwon-si, Gyeonggi-do 16677 (KR); JEONG, Hongsil, Suwon-si, Gyeonggi-do 16677 (KR); KIM, Jaeyoel, Suwon-si, Gyeonggi-do 16677 (KR)
(74) Representative: Nederlandsch Octrooibureau
(86) International application number: PCT/KR2017/011345
(87) International publication number: WO 2018/070842

(57) **Abstract**

The present disclosure relates to a communication method and system for converging a 5th-Generation (5G) communication system for supporting higher data rates beyond a 4th-Generation (4G) system with a technology for Internet of Things (IoT). The present disclosure may be applied to intelligent services based on the 5G communication technology and the IoT-related technology, such as smart home, smart building, smart city, smart car, connected car, health care, digital education, smart retail, security and safety services. The present invention proposes an apparatus and method for applying channel coding to packet transmission and reception of a terminal in a system in which 4G and 5G coexist.

## Description

### [Technical Field]

The disclosure relates to an apparatus and method for performing channel encoding and decoding in a wireless communication system.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

The 5G communication system is being developed to meet the increasing demand for data traffic after commercial deployment of the 4G communication system. In this case, the 5G communication system can coexist with the 4G communication system, and can use a channel coding scheme different from that of the 4G communication system.

### [Disclosure of Invention]

### [Technical Problem]

Accordingly, the disclosure is to provide an apparatus and method for applying channel coding to packets transmitted and received by a terminal in a system where a fourth generation communication system and a fifth generation communication system coexist.

### [Solution to Problem]

According to an embodiment of the disclosure, there is provided a method of data transmission and reception for a terminal in a communication system. The method may include: encoding or decoding data to be transmitted to or received from a first base station by using a first channel coding scheme; receiving information on a second channel coding scheme; and encoding or decoding data to be transmitted to or received from the first base station by using the second channel coding scheme indicated by the received information. Each of the first channel coding scheme and the second channel coding scheme may be based on one of a turbo code, a low-density parity-check (LDPC) code, and a polar code. The method may further include receiving information on the second channel coding scheme from the first base station, or receiving information on the first channel coding scheme from the second base station. The first channel coding scheme may be configured in advance between the terminal and the first base station.

According to an embodiment of the disclosure, there is provided a method of data transmission and reception for a first base station in a communication system. The method may include: encoding or decoding data to be transmitted to or received from a terminal by using a first channel coding scheme; and encoding or decoding data to be transmitted to or received from the terminal by using a second channel coding scheme, wherein the second channel coding scheme may be notified to the terminal via information indicating the second channel coding scheme, and wherein each of the first channel coding scheme and the second channel coding scheme may be based on one of a turbo code, a low-density parity-check (LDPC) code, and a polar code.

According to an embodiment of the disclosure, there is provided a terminal capable of data transmission and reception in a communication system. The terminal may include: a transceiver configured to transmit and receive signals to and from a first base station and a second base station; and a controller configured to control encoding or decoding data to be transmitted to or received from the first base station by using a first channel coding scheme, receiving information on a second channel coding scheme, and encoding or decoding data to be transmitted to or received from the first base station by using the second channel coding scheme indicated by the received information. Each of the first channel coding scheme and the second channel coding scheme may be based on one of a turbo code, a low-density parity-check (LDPC) code, and a polar code.

According to an embodiment of the disclosure, there is provided a first base station capable of data transmission and reception in a communication system. The first base station may include: a transceiver configured to transmit and receive signals to and from a second base station and a terminal; and a controller configured to control encoding or decoding data to be transmitted to or received from the terminal by using a first channel coding scheme, and encoding or decoding data to be transmitted to or received from the terminal by using a second channel coding scheme. The second channel coding scheme may be notified to the terminal via information indicating the second channel coding scheme, and each of the first channel coding scheme and the second channel coding scheme may be based on one of a turbo code, a low-density parity-check (LDPC) code, and a polar code.

### [Advantageous Effects of Invention]

According to an embodiment of the disclosure, 4G based channel coding and 5G based channel coding are variably supported, and it is possible to effectively support various communication environments and situations in the 5G communication system.

### [Brief Description of Drawings]

FIG. 1 illustrates an embodiment for obtaining channel coding information to be used for the data channel with a 5G cell when the terminal transmits and receives data to and from the 4G base station and the 5G base station according to the first method.
FIG. 2 illustrates an embodiment for obtaining channel coding information to be used for the data channel with a 5G cell when the terminal transmits and receives data to and from the 4G base station and the 5G base station according to the first method.
FIG. 3 illustrates an embodiment for obtaining channel coding information to be used for the data channel with a 5G cell when the terminal transmits and receives data to and from the 4G base station and the 5G base station according to the second method.
FIG. 4 illustrates an embodiment for obtaining channel coding information to be used for the data channel with a 5G cell when the terminal transmits and receives data to and from the 4G base station and the 5G base station according to the first method.
FIG. 5 illustrates an embodiment for obtaining channel coding information to be used for the data channel with a 5G cell when the terminal transmits and receives data to and from the 4G base station and the 5G base station according to the second method.
FIG. 6 illustrates a detailed embodiment for obtaining channel coding information to be used for the data channel with a 5G cell when the terminal transmits and receives data to and from the 4G base station and the 5G base station according to the first method.
FIG. 7 illustrates an embodiment for obtaining channel coding information to be used for the data channel with a 5G cell when the terminal transmits and receives data to and from the 4G base station and the 5G base station according to the second method.
FIG. 8 illustrates an embodiment for obtaining information on the data channel coding scheme of the second 5G base station when the terminal switches the connection from the first 5G base station to the second 5G base station.
FIG. 9 illustrates an embodiment for obtaining information on the data channel coding scheme of the second 5G base station when the terminal switches the connection from the first 5G base station to the second 5G base station.
FIG. 10 is a block diagram of a terminal capable of carrying out the disclosure.
FIG. 11 is a block diagram of a 4G base station capable of carrying out the disclosure.
FIG. 12 is a block diagram of a 5G base station capable of carrying out the disclosure.

### [Mode for the Invention]

Hereinafter, embodiments of the disclosure are described in detail with reference to the accompanying drawings.

Descriptions of functions and structures well known in the art and not directly related to the disclosure may be omitted for clarity and conciseness without obscuring the subject matter of the disclosure.

In the drawings, some elements are exaggerated, omitted, or only outlined in brief, and thus may be not drawn to scale. The same or similar reference symbols are used throughout the drawings to refer to the same or like parts.

The aspects, features, and advantages of certain embodiments of the disclosure will be more apparent from the following detailed description taken in conjunction with the accompanying drawings. The description of the various embodiments is to be construed as exemplary only and does not describe every possible instance of the disclosure. It should be apparent to those skilled in the art that the following description of various embodiments of the disclosure is provided for illustrative purposes only and not for the purpose of limiting the disclosure as defined by the appended claims and their equivalents. The same reference symbols are used throughout the description to refer to the same parts.

Meanwhile, it is known to those skilled in the art that blocks of a flowchart (or sequence diagram) and a combination of flowcharts may be represented and executed by computer program instructions. These computer program instructions may be loaded on a processor of a general purpose computer, special purpose computer, or programmable data processing equipment. When the loaded program instructions are executed by the processor, they create a means for carrying out functions described in the flowchart. As the computer program instructions may be stored in a computer readable memory that is usable in a specialized computer or a programmable data processing equipment, it is also possible to create articles of manufacture that carry out functions described in the flowchart. As the computer program instructions may be loaded on a computer or a programmable data processing equipment, when executed as processes, they may carry out steps of functions described in the flowchart.

A block of a flowchart (or sequence diagram) may correspond to a module, a segment or a code containing one or more executable instructions implementing one or more logical functions, or to a part thereof. In some cases, functions described by blocks may be executed in an order different from the listed order. For example, two blocks listed in sequence may be executed at the same time or executed in reverse order.

In the description, the word "unit", "module", or the like may refer to a software component or hardware component such as an FPGA or ASIC capable of carrying out a function or an operation. However, "unit" or the like is not limited to hardware or software. A unit or the like may be configured so as to reside in an addressable storage medium or to drive one or more processors. Units or the like may refer to software components, object-oriented software components, class components, task components, processes, functions, attributes, procedures, subroutines, program code segments, drivers, firmware, microcode, circuits, data, databases, data structures, tables, arrays, or variables. A function provided by a component and unit may be a combination of smaller components and units, and it may be combined with others to compose large components and units. Components and units may be configured to drive a device or one or more processors in a secure multimedia card. In one embodiment, a unit may include one or more processors.

In the description, a "base station" may be used interchangeably with an evolved Node B (eNB), or gNB, and a "terminal" may be used interchangeably with a user equipment (UE). A base station constituting a 4G communication system (4G base station) may control a cell of the 4G communication system (4G cell), and a base station constituting a 5G communication system (5G base station) may control a cell of the 5G communication system (5G cell).

In the case of the fourth generation communication system (4G system), the channel coding applied to the data packet on the data channel transmitted and received by the terminal and the base station is performed in one way (e.g., turbo coding). In the case of the fifth generation communication system (5G system), the channel coding applied to the data packet on the data channel transmitted and received by the terminal and the base station may be performed in one or more ways (e.g., low-density parity-check (LDPC) coding, turbo coding, and polar coding). In the disclosure, a description is given of a method of operating one or more channel coding schemes for the data channel in the 5G system standalone mode and/or the 4G and 5G coexistence mode.

The channel coding scheme to be applied to the data channel may be determined by the 4G base station or the 5G base station and may be notified to the terminal based on at least one of the channel coding capability information of the terminal or the communication service received by the terminal (Enhanced Mobile Broadband (eMBB), Massive Machine Type Communication (mMTC), or Ultra Reliable and Low Latency Communications (URLLC)).

The channel coding scheme to be applied to the data channel of the 5G cell can be notified in the following manner. The default channel coding scheme for the terminal accessing a 5G base station may be notified through the base station (4G base station or 5G base station). In another embodiment, the default channel coding scheme used by the terminal accessing the 5G cell may be preset in the terminal without separate signaling. In addition, when the terminal performs data transmission and reception with the 5G cell by using the default channel coding scheme, a signaling indicating a channel coding scheme change (i.e., indicating application of an optional channel coding scheme) may be transmitted to the terminal through the 4G base station or the 5G base station. In another embodiment, when the terminal performs data transmission and reception with the 5G cell by using the optional channel coding scheme, a signaling indicating a channel coding scheme change (i.e., indicating application of the default channel coding scheme) may be transmitted to the terminal through the 4G base station or the 5G base station.

The default channel coding scheme may be a channel coding scheme supported by all terminals connected to the 5G cell. The optional channel coding scheme may be a channel coding scheme that can be supported by a terminal connected to the 5G cell in addition to the default channel coding scheme.

When the terminal performs data transmission and reception through the data channel of the 5G cell, the signaling indicating whether to use the default channel coding scheme or the optional channel coding scheme may be transmitted through the 4G base station or the 5G base station.

The signaling indicating the default channel coding scheme to be applied to the data channel of the 5G cell may be transmitted via at least one of a radio resource control (RRC) signaling (RRC connection reconfiguration message, or UE capability message) transmitted by a 4G base station, a system information block (SIB) broadcast by a 4G base station, an RRC signaling (RRC connection reconfiguration message, or UE capability message) transmitted by a 5G base station, a system information block broadcast by a 5G base station, a random access channel (RACH) signaling (random access response (RAR), or RAR grant) transmitted by a 5G base station, downlink control information (DCI) related to a downlink channel transmitted by a 5G base station, or uplink control information (UCI) related to the uplink channel transmitted by a 5G base station.

The signaling indicating the optional channel coding scheme to be applied to the data channel of the 5G cell may be transmitted via at least one of an (RRC) signaling (RRC connection reconfiguration message, or UE capability message) transmitted by a 4G base station, a system information block (SIB) broadcast by a 4G base station, an RRC signaling (RRC connection reconfiguration message, or UE capability message) transmitted by a 5G base station, a system information block broadcast by a 5G base station, a RACH signaling (RAR, or RAR grant) transmitted by a 5G base station, DCI related to a downlink channel transmitted by a 5G base station, or UCI related to the uplink channel transmitted by a 5G base station.

The 4G and 5G coexistence mode may include a first method in which the terminal is connected to both the 4G base station and the 5G base station through multi-connectivity or dual-connectivity and transmits and receives a packet to and from the two base stations, and a second method in which the terminal is connected to one of the 4G base station and the 5G base station through a multi-radio connection, dual-radio connection, or dual mode connection and transmits and receives a packet through the 4G base station or the 5G base station.

In the first method, the 4G base station operates as a master base station and the 5G base station operates as a secondary base station; and the 4G base station can transmit and receive an RRC signaling to and from the terminal but the 5G base station may be unable to directly transmit and receive an RRC signaling to and from the terminal. In this case, the 5G base station may transmit and receive an RRC signaling to and from the terminal via the 4G base station. In the second method, the 5G base station can also directly transmit and receive an RRC signaling to and from the terminal. In addition, the disclosure can be applied not only when the 4G system coexists with the 5G system but also when the 5G system exists alone.

In the disclosure, the channel coding information may include at least one of information indicating the coding scheme based on turbo codes, LDPC codes or polar codes, information on the code rate corresponding to the code, or information indicating one or more of plural codes used when a specific coding scheme is used.

In the RACH procedure, a RACH preamble and a random access response (RAR) message (or signaling) are exchanged between the base station and the terminal. In the RRC connection setup procedure, an RRC connection request message, an RRC connection setup message, an RRC connection setup complete message, an RRC connection reconfiguration message, an RRC connection reconfiguration complete message are exchanged between the base station and the terminal. Information indicating the coding scheme in the 5G system can be transmitted through a signaling transmitted from the base station to the terminal among the signalings in the RACH procedure or the RRC connection setup procedure.

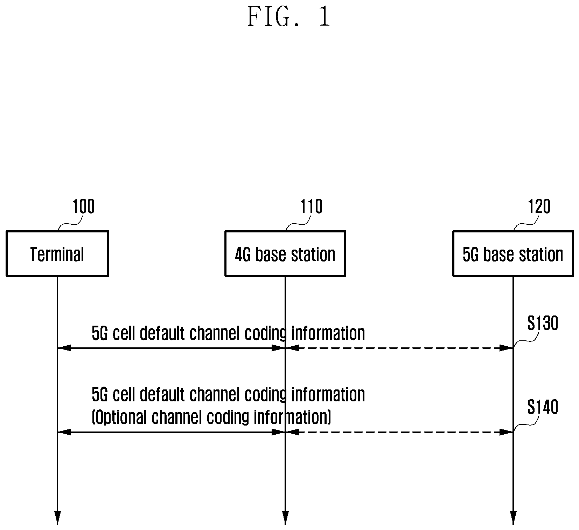

FIG. 1 illustrates an embodiment for obtaining channel coding information to be used for the data channel with a 5G cell when the terminal transmits and receives data to and from the 4G base station and the 5G base station according to the first method.

With reference to FIG. 1, the terminal 100 may receive 5G cell default channel coding information through the 4G base station 110 (S130). In this step, the 4G base station 110 and the 5G base station 120 may exchange the 5G cell default channel coding information. Alternatively, the 4G base station 110 may receive the 5G cell default channel coding information from the 5G base station 120. The terminal 100 may receive information on a different channel coding scheme supported by the 5G cell via the 4G base station 110 (S140). In this step, the 4G base station 110 and the 5G base station 120 may exchange the changed 5G cell channel coding information. Alternatively, the 4G base station 110 may receive the changed 5G cell channel coding information from the 5G base station 120. The 5G cell default channel coding information received at step S130 may be used to encode and decode the data packet transmitted and received through the 5G cell until the optional channel coding information is received at step S140. The criteria for changing the channel coding scheme may include at least one of the channel coding capability of the terminal or the communication service (e.g., eMBB, mMTC, or URLLC) received by the terminal.

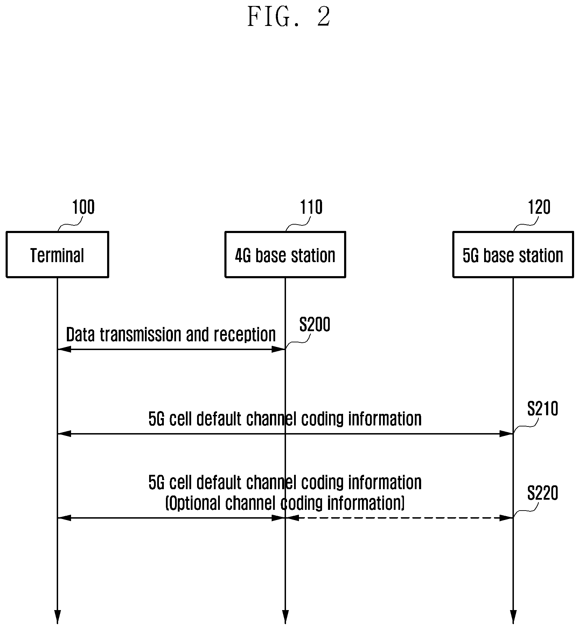

FIG. 2 illustrates an embodiment for obtaining channel coding information to be used for the data channel with a 5G cell when the terminal transmits and receives data to and from the 4G base station and the 5G base station according to the first method.

The terminal 100 can perform data transmission and reception through the 4G base station 110 (S200). The terminal 100 may establish dual-connectivity with the 4G base station 110 and the 5G base station 120, and may receive the 5G cell default channel coding information from the 5G base station 120 (S210). The terminal 100 may receive information on a different channel coding scheme supported by the 5G cell through the 4G base station 110 (S220). In this step, the 4G base station 110 and the 5G base station 120 may exchange the changed 5G cell channel coding information. Alternatively, the 4G base station may receive the changed 5G cell channel coding information from the 5G base station. The 5G cell default channel coding information received at step S210 may be used to encode and decode the data packet transmitted and received through the 5G cell until the optional channel coding information is received at step S220. The criteria for changing the channel coding scheme may include at least one of the channel coding capability of the terminal or the communication service (e.g., eMBB, mMTC, or URLLC) received by the terminal.

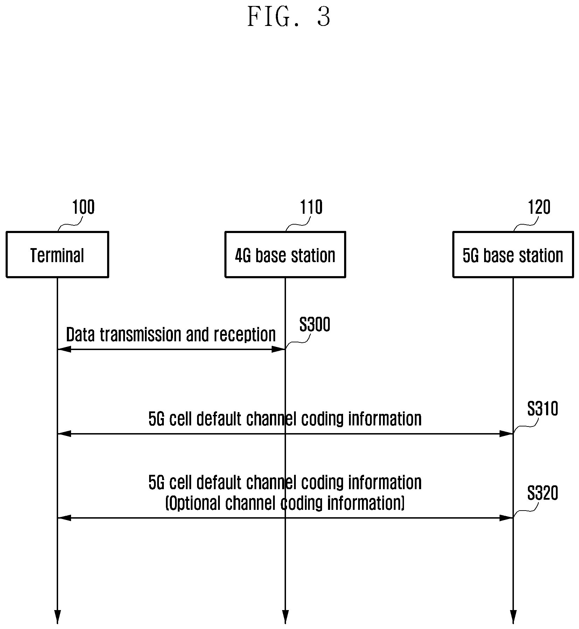

FIG. 3 illustrates an embodiment for obtaining channel coding information to be used for the data channel with a 5G cell when the terminal transmits and receives data to and from the 4G base station and the 5G base station according to the second method.

The terminal 100 can perform data transmission and reception through the 4G base station 110 (S300). The terminal 100 may perform data transmission and reception through the 5G base station 120 in addition to the 4G base station 110. The terminal 100 may initiate connection establishment with the 5G base station 120 and receive 5G cell default channel coding information from the 5G base station 120 (S310). The terminal 100 may receive information on a different channel coding scheme supported by the 5G cell through the 5G base station 120 (S320). The 5G cell default channel coding information received at step S310 may be used to encode and decode the data packet transmitted and received through the 5G cell until the optional channel coding information is received at step S320. The criteria for changing the channel coding scheme may include at least one of the channel coding capability of the terminal or the communication service (e.g., eMBB, mMTC, or URLLC) received by the terminal.

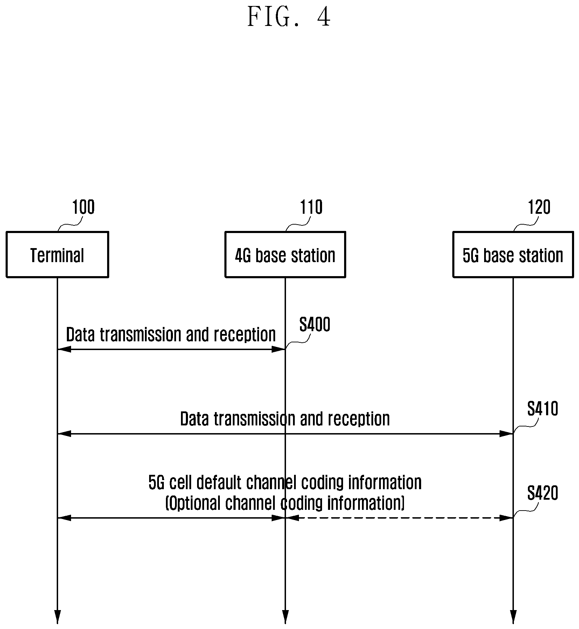

FIG. 4 illustrates an embodiment for obtaining channel coding information to be used for the data channel with a 5G cell when the terminal transmits and receives data to and from the 4G base station and the 5G base station according to the first method.

The terminal 100 can perform data transmission and reception through the 4G base station 110 (S400). The terminal 100 may establish multi-connectivity with the 4G base station 110 and the 5G base station 120, and may perform data transmission and reception with the 5G base station 120 (S410). In step S410, the 5G cell default channel coding scheme preset in the terminal may be used for the data packet on the data channel between the terminal and the 5G base station. The terminal 100 may receive information on a different channel coding scheme supported by the 5G cell through the 4G base station 110 (S420). In this step, the 4G base station 110 and the 5G base station 120 may exchange the changed 5G cell channel coding information. Alternatively, the 4G base station may receive the changed 5G cell channel coding information from the 5G base station. The 5G cell default channel coding information used at step S410 may be used to encode and decode the data packet transmitted and received through the 5G cell until the optional channel coding information is received at step S420. The criteria for changing the channel coding scheme may include at least one of the channel coding capability of the terminal or the communication service (e.g., eMBB, mMTC, or URLLC) received by the terminal.

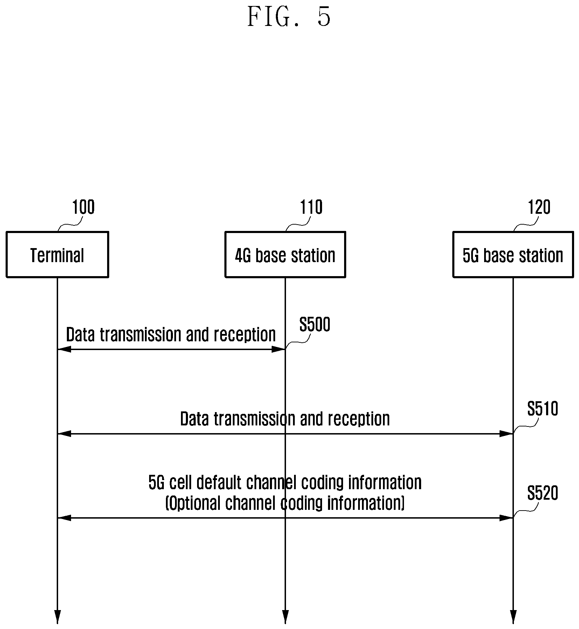

FIG. 5 illustrates an embodiment for obtaining channel coding information to be used for the data channel with a 5G cell when the terminal transmits and receives data to and from the 4G base station and the 5G base station according to the second method.

The terminal 100 can perform data transmission and reception through the 4G base station 110 (S500). The terminal 100 may perform data transmission and reception through the 5G base station 120 in addition to the 4G base station 110 (S510). In step S510, the terminal 110 may apply the preset default channel coding scheme for the 5G cell to the data packet on the data channel with the 5G base station 120. The terminal 100 may receive information on a different channel coding scheme supported by the 5G cell through the 5G base station 120 (S520). The 5G cell default channel coding information used at step S510 may be used to encode and decode the data packet transmitted and received through the 5G cell until the optional channel coding information is received at step S520. The criteria for changing the channel coding scheme may include at least one of the channel coding capability of the terminal or the communication service (e.g., eMBB, mMTC, or URLLC) received by the terminal.

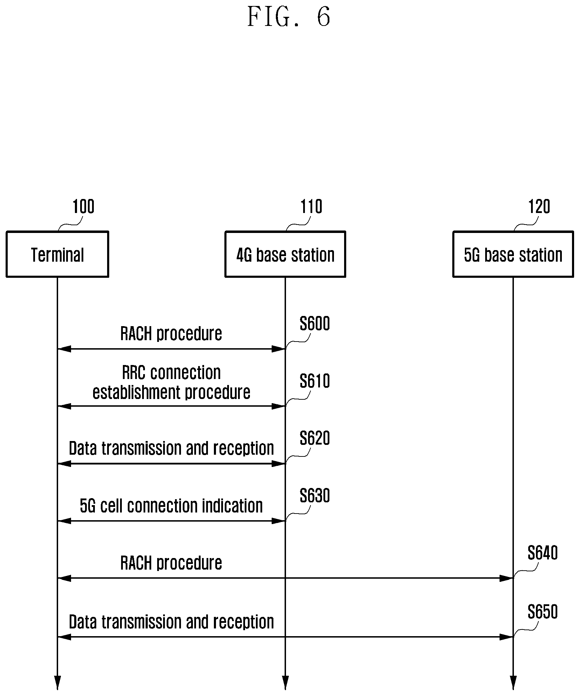

FIG. 6 illustrates a detailed embodiment for obtaining channel coding information to be used for the data channel with a 5G cell when the terminal transmits and receives data to and from the 4G base station and the 5G base station according to the first method.
First, the terminal 100 performs an RACH procedure with the 4G base station 110 (S600), performs an RRC connection establishment procedure (S610), and performs data transmission and reception through the 4G base station 110 (S620). Upon determining that the terminal 100 supports multi-connectivity with the 5G base station 120, the 4G base station 110 commands the terminal 100 to establish a 5G cell connection (S630). The signaling at step S630 may include information on the channel coding scheme to be used for the data channel with the 5G cell. To obtain information on the channel coding scheme to be used for the 5G cell, the terminal 100 may transmit its channel coding capability information through the 4G base station 110. The channel coding information to be used in the 5G cell determined based on the channel coding capability information of the terminal is transmitted to the terminal 100 through the 4G base station 110. Alternatively, the default channel coding information to be used in the 5G cell can be transmitted to the terminal 110 through the 4G base station 110.
   The terminal 100 may perform an RACH procedure with the 5G base station 120 if necessary (S640). The terminal 100 may perform a data transmission and reception procedure with the 5G base station 120 (S650). In step S650, the terminal 100 may perform data transmission and reception with the 5G base station 120 by applying the channel coding scheme identified at step S630. Thereafter, when the terminal 100 wishes to change the channel coding scheme used for the data channel with the 5G cell, the 5G base station 120 may notify the terminal 100 of the changed channel coding scheme for the 5G cell through the 4G base station 110. Alternatively, to apply the optional channel coding scheme in the 5G cell, the 5G base station 120 may notify the terminal 100 of the 5G cell optional channel coding scheme through a 5G signaling. The signaling indicating the changed channel coding scheme in the 5G cell may be performed by at least one of an RRC signaling transmitted to the terminal 100 through the 4G base station 110, or a message, DCI, UCI, or RRC signaling transmitted by the 5G base station 120 to the terminal during the RACH procedure.
   The criteria for determining the channel coding scheme for the 5G cell data may include at least one of the channel coding capability of the terminal or the communication service (e.g., eMBB, mMTC, or URLLC) received by the terminal.
   In the embodiment of FIG. 6, the terminal 100 and the 4G base station 110 apply the 4G-based channel coding scheme to the packet transmitted through the data channel between the terminal 100 and the 4G base station 110, and the terminal 100 and the 5G base station 120 apply the indicated 5G channel coding scheme to the packet transmitted through the data channel between the terminal 100 and the 5G base station 120.
Second, the terminal 100 performs an RACH procedure with the 4G base station 110 (S600), performs an RRC connection establishment procedure (S610), and performs data transmission and reception through the 4G base station 110 (S620). Upon determining that the terminal 100 supports multi-connectivity with the 5G base station 120, the 4G base station 110 commands the terminal 100 to establish a 5G cell connection (S630). The terminal 100 may perform an RACH procedure with the 5G base station 120 (S640). Through the signaling (e.g., RAR message, or RAR grant information) transmitted to the terminal 100 during the RACH procedure, the 5G base station (120) may notify the terminal 100 of the channel coding scheme to be used for the data channel with the 5G base station 120.
   Upon receiving the channel coding scheme indication from the 5G base station 120, the terminal 100 may apply the indicated channel coding scheme to the data channel with the 5G base station 120. After the terminal 100 completes connection setup with the 5G base station 120, the 5G base station 120 may notify a different channel coding scheme to be used by the terminal through a higher layer signaling (e.g., RRC connection reconfiguration message). The higher layer signaling may be delivered through an RRC connection between the 4G base station 110 and the terminal 100. Or, to apply an optional channel coding scheme in the 5G cell, the 5G base station 120 may notify the terminal 100 of a 5G cell optional channel coding scheme through the 4G base station 110. Alternatively, information on the optional channel coding scheme to be used in the 5G cell may be transmitted to the terminal 100 through a message (or, signaling) exchanged during the RACH procedure. The channel coding scheme changed by the 5G base station may be determined based on at least one of the channel coding capability of the terminal or the communication service (e.g., eMBB, mMTC, or URLLC) received by the terminal.
   The terminal 100 may perform data transmission and reception with the 5G base station 120 (S650) by applying the channel coding scheme identified at step S640. The procedure for changing the channel coding scheme for the data channel of the 5G cell through a higher layer signaling may also be performed after step S650. The criteria for changing the channel coding scheme may include at least one of the channel coding capability of the terminal or the communication service (e.g., eMBB, mMTC, or URLLC) received by the terminal.
   In the above embodiment, the terminal 100 and the 4G base station 110 apply the 4G-based channel coding scheme to the packet transmitted through the data channel between the terminal 100 and the 4G base station 110, and the terminal 100 and the 5G base station 120 apply the indicated 5G channel coding scheme to the packet transmitted through the data channel between the terminal 100 and the 5G base station 120.
Third, the terminal 100 performs an RACH procedure with the 4G base station 110 (S600), performs an RRC connection establishment procedure (S610), and performs data transmission and reception through the 4G base station 110 (S620). Upon determining that the terminal 100 supports multi-connectivity with the 5G base station 120, the 4G base station 110 commands the terminal 100 to establish a 5G cell connection (S630). The terminal 100 may receive the system information broadcast message transmitted by the 5G base station 120 while making a connection to the indicated 5G cell. The system information broadcast message transmitted by the 5G base station 120 may include channel coding information for the data channel of the 5G cell. Alternatively, default channel coding information to be used in the 5G cell may be transmitted to the terminal through the system information broadcast message.
   The terminal 100 may perform an RACH procedure with the 5G base station 120 if necessary (S640). The terminal 100 may perform data transmission and reception with the 5G base station 120 by applying the channel coding scheme obtained through the system information broadcast message transmitted by the 5G base station 120 (S650). Thereafter, when the terminal 100 wishes to change the channel coding scheme used for the data channel with the 5G cell, the 5G base station 120 may notify the terminal 100 of the changed channel coding scheme for the 5G cell via the 4G base station 110 through, e.g., an RRC signaling. Alternatively, to apply the optional channel coding scheme in the 5G cell, the 5G base station 120 may notify the 5G cell optional channel coding scheme to the terminal 100 through a signaling in the RACH procedure. The criteria for changing the channel coding scheme may include at least one of the channel coding capability of the terminal or the communication service (e.g., eMBB, mMTC, or URLLC) received by the terminal.
   In the above embodiment, the terminal 100 and the 4G base station 110 apply the 4G-based channel coding scheme to the packet transmitted through the data channel between the terminal 100 and the 4G base station 110, and the terminal 100 and the 5G base station 120 apply the indicated 5G channel coding scheme to the packet transmitted through the data channel between the terminal 100 and the 5G base station 120.
Fourth, in negotiation about the capability of the terminal for the 4G cell and the capability of the terminal for the 5G cell while the terminal 100 performs RRC connection establishment with the 4G base station 110, the terminal can receive information on the channel coding scheme for the data channel in the 5G cell from the 4G base station. The channel coding scheme for the data channel in the 5G cell identified during RRC connection establishment with the 4G base station 110 can be used as the default channel coding scheme for the 5G cell. For example, the terminal may apply the default channel coding scheme in the process of establishing a connection to the 5G cell, and may change the channel coding scheme for the 5G cell after completing connection establishment to the 5G cell. To apply an optional channel coding scheme in the 5G cell, the optional channel coding scheme for the 5G cell may be notified to the terminal 100 through the 4G base station 110. As another example, the terminal can receive information on the optional channel coding scheme for the 5G cell during connection establishment to the 5G cell, and can change the channel coding scheme for the 5G cell immediately after receiving the information on the optional channel coding scheme. The criteria for changing the channel coding scheme may include at least one of the channel coding capability of the terminal or the communication service (e.g., eMBB, mMTC, or URLLC) received by the terminal. In this embodiment, the terminal 100 and the 4G base station 110 apply the 4G-based channel coding scheme to the packet transmitted through the data channel between the terminal 100 and the 4G base station 110, and the terminal 100 and the 5G base station 120 apply the indicated 5G channel coding scheme to the packet transmitted through the data channel between the terminal 100 and the 5G base station 120.
Fifth, the terminal 100 can operate the 4G based channel coding scheme used for the data channel with the 4G base station 110 as the default channel coding scheme for the data channel in the 5G cell. The terminal 100 may receive information on the channel coding scheme in the 5G cell, for example, a signaling indicating whether to apply the default channel coding scheme or the optional channel coding scheme through the 4G base station 110. For example, the terminal may apply the default channel coding scheme in the process of establishing a connection to the 5G cell, and may change the channel coding scheme for the 5G cell after completing connection establishment to the 5G cell. To apply an optional channel coding scheme in the 5G cell, the optional channel coding scheme for the 5G cell may be notified to the terminal 100 through the 4G base station 110. As another example, the terminal can receive information on the optional channel coding scheme for the 5G cell during connection establishment to the 5G cell, and can change the channel coding scheme for the 5G cell immediately after receiving the information on the optional channel coding scheme. The criteria for changing the channel coding scheme may include at least one of the channel coding capability of the terminal or the communication service (e.g., eMBB, mMTC, or URLLC) received by the terminal.
Sixth, the default channel coding scheme between the terminal 100 and the 5G base station 120 may be configured in advance. In this case, the terminal 100 may apply the default channel coding scheme when performing the RACH procedure with the 5G base station 120 in response to the command to connect to the 5G cell from the 4G base station 110 at step S630. After completing connection setup with the 5G cell, the channel coding scheme with the 5G cell may be changed. To apply an optional channel coding scheme in the 5G cell, the 5G cell optional channel coding scheme may be notified to the terminal 100 through the 4G base station 110. As another example, the terminal can receive information indicating the optional channel coding scheme for the 5G cell during connection setup with the 5G cell, and can change the channel coding scheme for the 5G cell immediately after receiving the information indicating the optional channel coding scheme. The criteria for changing the channel coding scheme may be based on at least one of the channel coding capability of the terminal or the communication service (e.g., eMBB, mMTC, or URLLC) received by the terminal.

The above embodiments are not mutually exclusive, and all or some of them may be used in combination.

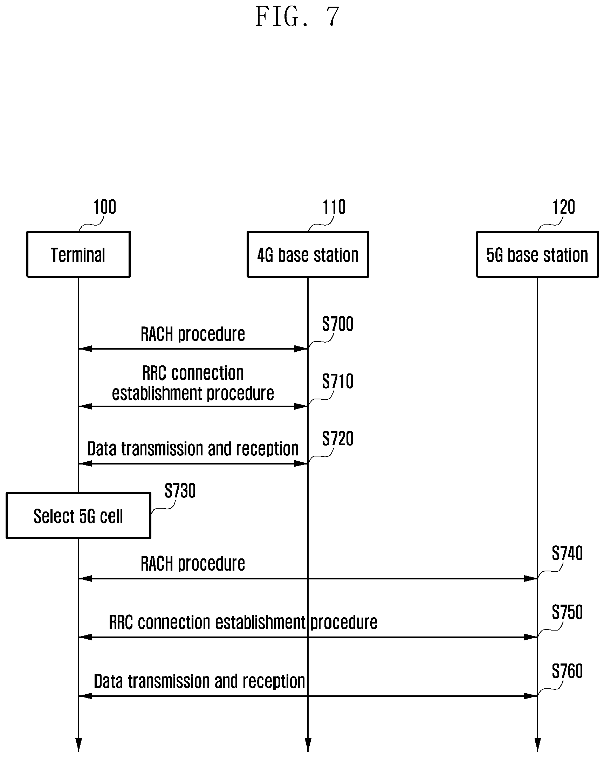

FIG. 7 illustrates an embodiment for obtaining channel coding information to be used for the data channel with a 5G cell when the terminal transmits and receives data to and from the 4G base station and the 5G base station according to the second method.
First, the terminal 100 performs an RACH procedure with the 4G base station 110 (S700), performs an RRC connection establishment procedure (S710), and performs data transmission and reception through the 4G base station 110 (S720). If the terminal 100 supports data transmission and reception with a 5G cell, it selects a 5G cell through a 5G cell search procedure and initiates connection setup with the selected 5G cell (S730). The terminal performs a RACH procedure with the 5G base station (S740). In step S740, the terminal may receive information on the default channel coding scheme (e.g., indicator) to be applied to the data channel of the 5G cell. The default channel coding information may be transmitted through, for example, a RAR message or RAR grant information in the RACH procedure.
   The terminal can continue the connection setup procedure with the 5G cell by using the default channel coding scheme (S750). The terminal may receive information on the optional channel coding scheme (e.g., indicator) to be applied to the data channel of the 5G cell in the RRC connection establishment procedure at step S750. The optional channel coding scheme information may be included in a higher layer signaling (e.g., RRC connection reconfiguration message) from the 5G base station. Thereafter, the terminal may perform data transmission and reception with the base station by applying the newly received optional channel coding scheme (S760).
   The optional channel coding scheme may be determined based on at least one of the channel coding capability of the terminal or the communication service (e.g., eMBB, mMTC, or URLLC) received by the terminal. In this embodiment, the terminal 100 and the 4G base station 110 apply the 4G-based channel coding scheme to the packet transmitted through the data channel between the terminal 100 and the 4G base station 110, and the terminal 100 and the 5G base station 120 apply the indicated 5G channel coding scheme to the packet transmitted through the data channel between the terminal 100 and the 5G base station 120.
Second, the terminal 100 performs an RACH procedure with the 4G base station 110 (S700), performs an RRC connection establishment procedure (S710), and performs data transmission and reception through the 4G base station 110 (S720). If the terminal 100 supports data transmission and reception with a 5G cell, it selects a 5G cell through a 5G cell search procedure and initiates connection setup with the selected 5G cell (S730). The terminal 100 may receive information on the default channel coding scheme (e.g., indicator) to be applied to the data channel of the 5G cell through a system information broadcast message transmitted by the 5G base station 120. The terminal 100 performs an RACH procedure with the 5G base station 120 (S740). The terminal may continue the connection establishment procedure with the 5G cell by using the default channel coding scheme identified through the system information broadcast message (S750). The terminal may receive an indication of the optional channel coding scheme to be applied to the data channel of the 5G cell in the RRC connection establishment procedure at step S750. The optional channel coding information may be included in a higher layer signaling (e.g., RRC connection reconfiguration message) from the 5G base station. As another example, the terminal can receive information on the optional channel coding scheme for the 5G cell through the RACH signaling at step S740, and can change the channel coding scheme for the 5G cell immediately after receiving the information on the optional channel coding scheme. Thereafter, the terminal may perform data transmission and reception with the base station by applying the newly received optional channel coding scheme (S760).
   The optional channel coding scheme may be determined based on at least one of the channel coding capability of the terminal or the communication service (e.g., eMBB, mMTC, or URLLC) received by the terminal. In this embodiment, the terminal 100 and the 4G base station 110 apply the 4G-based channel coding scheme to the packet transmitted through the data channel between the terminal 100 and the 4G base station 110, and the terminal 100 and the 5G base station 120 apply the indicated 5G channel coding scheme to the packet transmitted through the data channel between the terminal 100 and the 5G base station 120.
Third, the terminal 100 performs an RACH procedure with the 4G base station 110 (S700), performs an RRC connection establishment procedure (S710), and performs data transmission and reception through the 4G base station 110 (S720). If the terminal 100 supports data transmission and reception with a 5G cell, it selects a 5G cell through a 5G cell search procedure and initiates connection setup with the selected 5G cell (S730). The terminal 100 performs an RACH procedure with the 5G base station 120 (S740). The terminal may continue the connection establishment procedure with the 5G cell by using the preset default channel coding scheme without a separate signaling (S750). Specifically, the terminal 100 can perform the RRC connection establishment procedure by using the default channel coding scheme. The terminal may receive information on the optional channel coding scheme (e.g., indicator) to be applied to the data channel of the 5G cell in the RRC connection establishment procedure at step S750. The optional channel coding information may be included in a higher layer signaling (e.g., RRC connection reconfiguration message) from the 5G base station. As another example, the terminal can receive information on the optional channel coding scheme for the 5G cell through the RACH signaling (e.g., RAR or RAR grant) at step S740, and can change the channel coding scheme for the 5G cell immediately after receiving the information on the optional channel coding scheme. Thereafter, the terminal may perform data transmission and reception with the base station by applying the indicated optional channel coding scheme (S760).

The optional channel coding scheme may be determined based on at least one of the channel coding capability of the terminal or the communication service (e.g., eMBB, mMTC, or URLLC) received by the terminal. In this embodiment, the terminal 100 and the 4G base station 110 apply the 4G-based channel coding scheme to the packet transmitted through the data channel between the terminal 100 and the 4G base station 110, and the terminal 100 and the 5G base station 120 apply the indicated 5G channel coding scheme to the packet transmitted through the data channel between the terminal 100 and the 5G base station 120.

The above embodiments are not mutually exclusive, and all or some of them may be used in combination.

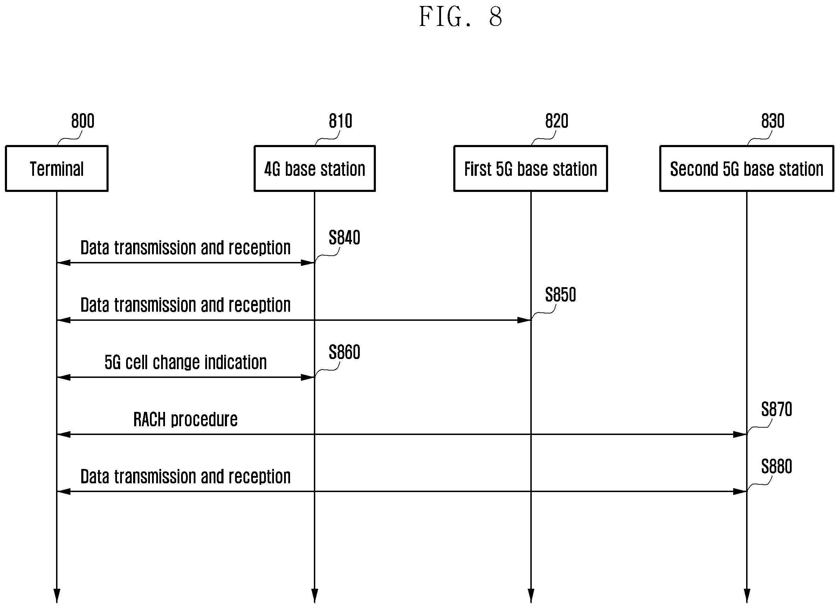

FIG. 8 illustrates an embodiment for obtaining information on the data channel coding scheme of the second 5G base station when the terminal switches the connection from the first 5G base station to the second 5G base station. This connection switching may be referred to as 5G base station switching, 5G base station handover, 5G cell change, or the like. It can be considered that the first method is applied in FIG. 8.
First, the terminal 800 can perform data transmission and reception through the 4G base station 810 (S840), and perform data transmission and reception through the first 5G base station 820 (S850). The terminal 800 may perform data transmission and reception using a 4G data channel coding scheme at step S840, and may perform data transmission and reception using a 5G data channel coding scheme at step S850. The channel coding scheme used at step S850 is a default data channel coding scheme or an optional data channel coding scheme. The terminal 800 can receive a 5G cell change indication through the 4G base station 810 (S860). The signaling for the 5G cell change indication includes information on the new second 5G base station 830, and may include information on the default data channel coding scheme to be used in the second 5G base station 830 according to an embodiment of the disclosure. The terminal may perform a RACH procedure with the second 5G base station 830 if necessary (S870). Then, the terminal can perform data transmission and reception with the second 5G base station 830 (S880). In step S880, the terminal 800 and the second 5G base station 830 may perform data transmission and reception by applying the default data channel coding scheme indicated at step S860. Upon receiving information on the optional channel coding scheme from the second 5G base station 830, the terminal 800 can perform data transmission and reception with the second 5G base station 830 by applying the optional channel coding scheme.
Second, the default channel coding scheme to be used in the second 5G base station 830 may be set in advance in the terminal without a separate signaling. Alternatively, the channel coding scheme used with the first 5G base station 820 may be the default channel coding scheme. After performing the cell change procedure with the second 5G base station 830, the terminal 800 may receive information on the optional channel coding scheme through a separate signaling. The separate signaling may be a signaling (e.g., RAR or RAR grant) during the RACH procedure with the second 5G base station 830 or an RRC signaling received through the 4G base station 810, the second 5G base station 820, or the second 5G base station 830. The terminal 800 can perform data transmission and reception with the second 5G base station 830 according to the information on the optional channel coding scheme. In this embodiment, the terminal 800 and the 4G base station 810 apply the 4G-based channel coding scheme to the packet transmitted through the data channel between the terminal and the 4G base station, and the terminal 800 and the 5G base station 820 or 830 apply the indicated 5G channel coding scheme to the packet transmitted through the data channel between the terminal and the 5G base station.
Third, the indication of the default data channel coding scheme to be used in the second 5G base station 830 may be obtained through a system information broadcast message transmitted by the second 5G base station 830. The terminal 800 may perform data transmission and reception with the second 5G base station 830 by applying the default channel coding scheme obtained through a received system information broadcast message from the second 5G base station 830. After performing the cell change procedure with the second 5G base station 830, the terminal 800 can receive information on the optional channel coding scheme through a separate signaling. The terminal 800 can perform data transmission and reception with the second 5G base station 830 according to the information on the optional channel coding scheme. In this embodiment, the terminal 800 and the 4G base station 810 apply the 4G-based channel coding scheme to the packet transmitted through the data channel between the terminal and the 4G base station, and the terminal 800 and the 5G base station 820 or 830 apply the indicated 5G channel coding scheme to the packet transmitted through the data channel between the terminal and the 5G base station.
Fourth, the information on the default channel coding scheme to be used in the second 5G base station 830 may be obtained through a message (e.g., RAR message or RAR grant information) transmitted by the second 5G base station 830 while the terminal 800 performs the RACH procedure in the cell change procedure with the second 5G base station 830. The terminal 800 can perform data transmission and reception with the second 5G base station 830 by applying the default channel coding scheme. The terminal 800 may receive information on the optional channel coding scheme through a separate signaling after performing the cell change procedure with the second 5G base station 830. The terminal 800 can perform data transmission and reception with the second 5G base station 830 according to the information on the optional channel coding scheme. In this embodiment, the terminal 800 and the 4G base station 810 apply the 4G-based channel coding scheme to the packet transmitted through the data channel between the terminal and the 4G base station, and the terminal 800 and the 5G base station 820 or 830 apply the indicated 5G channel coding scheme to the packet transmitted through the data channel between the terminal and the 5G base station.

The above embodiments are not mutually exclusive, and all or some of them may be used in combination.

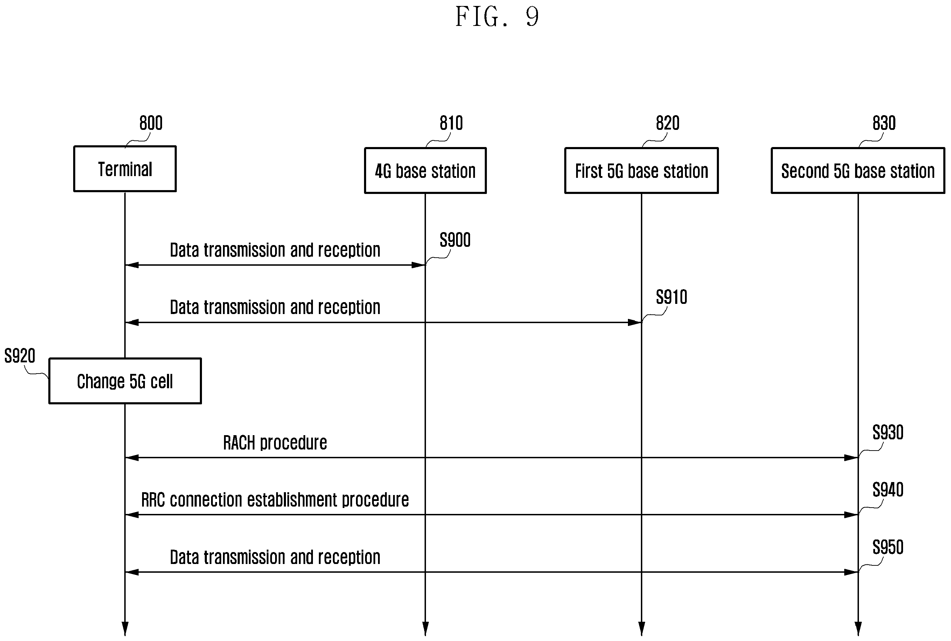

FIG. 9 illustrates an embodiment for obtaining information on the data channel coding scheme of the second 5G base station when the terminal switches the connection from the first 5G base station to the second 5G base station. This connection switching may be referred to as 5G base station switching, 5G base station handover, 5G cell change, or the like. It can be considered that the second method is applied in FIG. 9.
First, the terminal 800 can perform data transmission and reception through the 4G base station 810 (S900), and perform data transmission and reception through the first 5G base station 820 (S910). The terminal 800 may perform data transmission and reception using a 4G data channel coding scheme at step S900, and may perform data transmission and reception using a 5G data channel coding scheme at step S910. The channel coding scheme used at step S910 is a default channel coding scheme or an optional channel coding scheme. The terminal can perform a 5G cell change (S920). The 5G cell change may be initiated by an indication from the first 5G base station 820 or by the determination of the terminal. The signaling for the 5G cell change with the first 5G base station 820 includes information on the new second 5G base station 830, and may include information on the default data channel coding scheme to be used in the second 5G base station 830 according to an embodiment of the disclosure.
   The terminal 800 may perform a RACH procedure with the second 5G base station 830 if necessary (S930). The terminal 800 may perform an RRC connection establishment procedure with the second 5G base station 830 (S940). The terminal can perform data transmission and reception with the second 5G base station 830 (S950). In step S950, the terminal 800 and the second 5G base station 830 may encode and/or decode the data channel using the default channel coding scheme obtained at step S920. Thereafter, upon receiving a signaling including information on the optional channel coding scheme (e.g., indicator) from the second 5G base station 830, the terminal 800 can encode and/or decode the data channel by using the optional channel coding scheme.
Second, the terminal 800 can perform data transmission and reception with the second 5G base station 830 by applying a preset default channel coding scheme without receiving a separate signaling. The terminal 800 may apply the default channel coding scheme until it receives a signaling including information on the optional channel coding scheme from the second 5G base station 830. Upon receiving information on the optional channel coding scheme, the terminal 800 can perform data transmission and reception with the second 5G base station 830 by applying the optional channel coding scheme. The signaling carrying information on the optional channel coding scheme may be a signaling (e.g., RAR or RAR grant) in the RACH procedure with the second 5G base station 830, or an RRC signaling received through the 4G base station 810, the first 5G base station 830, or the second 5G base station 830. In this embodiment, the terminal 800 and the 4G base station 810 apply the 4G-based channel coding scheme to the packet transmitted through the data channel between the terminal and the 4G base station, and the terminal 800 and the 5G base station 820 or 830 apply the indicated 5G channel coding scheme to the packet transmitted through the data channel between the terminal and the 5G base station.
Third, the terminal 800 may obtain information on the default channel coding scheme through a system information broadcast message transmitted by the second 5G base station 830. The terminal 800 may apply the default channel coding scheme until it receives a signaling including information on the optional channel coding scheme from the second 5G base station 830. Upon receiving information on the optional channel coding scheme (e.g., indicator) from the second 5G base station 830, the terminal 800 may perform data transmission and reception with the second 5G base station 830 by applying the optional channel coding scheme. In this embodiment, the terminal 800 and the 4G base station 810 apply the 4G-based channel coding scheme to the packet transmitted through the data channel between the terminal and the 4G base station, and the terminal 800 and the 5G base station 820 or 830 apply the indicated 5G channel coding scheme to the packet transmitted through the data channel between the terminal and the 5G base station.
Fourth, the terminal 800 may obtain information on the default channel coding scheme from a signaling (e.g., RAR message or RAR grant information) transmitted by the second 5G base station 830 during the RACH procedure with the second 5G base station 830. The terminal 800 may apply the default channel coding scheme until it receives a signaling indicating an optional channel coding scheme from the second 5G base station 830. Upon receiving information on the optional channel coding scheme (e.g., indicator), the terminal 800 may perform data transmission and reception with the second 5G base station 830 by applying the optional channel coding scheme. In this embodiment, the terminal 800 and the 4G base station 810 apply the 4G-based channel coding scheme to the packet transmitted through the data channel between the terminal and the 4G base station, and the terminal 800 and the 5G base station 820 or 830 apply the indicated 5G channel coding scheme to the packet transmitted through the data channel between the terminal and the 5G base station.
Fifth, the terminal 800 may perform a 5G cell change to the second 5G base station 820, and may receive a signaling including information on the optional channel coding scheme (e.g., indicator) while performing an RRC connection establishment procedure with the second 5G base station 820. The terminal 800 may apply a preset default channel coding scheme until it receives a signaling indicating the optional channel coding scheme. The default channel coding scheme may be a channel coding scheme with the first 5G base station 820. Upon receiving information on the optional channel coding scheme (e.g., indicator), the terminal 800 may perform data transmission and reception with the second 5G base station 830 by applying the optional channel coding scheme. In this embodiment, the terminal 800 and the 4G base station 810 apply the 4G-based channel coding scheme to the packet transmitted through the data channel between the terminal and the 4G base station, and the terminal 800 and the 5G base station 820 or 830 apply the indicated 5G channel coding scheme to the packet transmitted through the data channel between the terminal and the 5G base station.

The above embodiments are not mutually exclusive, and all or some of them may be used in combination.

The terminal may separately have a modem supporting the 4G data channel coding scheme and a modem supporting the 5G data channel coding scheme.

In one embodiment, when the terminal is wirelessly connected through the 4G base station, the modem supporting the 4G channel coding scheme processes data transmitted and received through the 4G cell by applying the 4G channel coding scheme. When the terminal performs a connection setup procedure with the 5G base station via multi-connectivity (i.e., first method), the modem supporting the 4G channel coding scheme may obtain information on the channel coding scheme of the 5G cell and forward the obtained information to the modem supporting the 5G data channel coding scheme.

The information forwarded by the modem supporting the 4G channel coding scheme to the modem supporting the 5G channel coding scheme may include at least one of the default channel coding scheme of the 5G cell or the optional channel coding scheme of the 5G cell. To determine the default channel coding scheme of the 5G cell and the optional channel coding scheme of the 5G cell, the 4G modem and the 5G modem may exchange the 5G cell channel coding capability information of the terminal. The modem supporting the 5G channel coding scheme may process the data transmitted and received via the 5G cell by applying the indicated channel coding scheme among the default channel coding scheme of the 5G cell and the optional channel coding scheme of the 5G cell.

In another embodiment, when the terminal is wirelessly connected through the 4G base station, the modem supporting the 4G channel coding scheme processes the data transmitted and received via the 4G cell by applying the 4G channel coding scheme. When the terminal performs a connection setup procedure with the 5G base station through a dual radio or dual mode technology (i.e., second method), the modem supporting the 5G channel coding scheme of the terminal can receive information including at least one of the default channel coding scheme of the 5G cell or the optional channel coding scheme of the 5G cell from the 5G base station. The modem supporting the 5G channel coding scheme processes the data transmitted and received via the 5G cell by applying the indicated one of the default channel coding scheme and the optional channel coding scheme of the 5G cell. To determine and apply the optional channel coding scheme to data transmission and reception between the terminal and the 5G cell, the modem and the 5G base station may exchange at least one of the 5G cell channel coding capability information of the terminal or the service type (e.g., eMBB, mMTC or URLLC) information related to the terminal.

Alternatively, the terminal may have one modem supporting the 4G channel coding scheme and the 5G channel coding scheme.

In one embodiment, when the terminal is connected through the 4G base station, the modem processes the data transmitted and received via the 4G cell by applying the 4G channel coding scheme. When the terminal is connected to the 4G base station and the 5G base station through dual-connectivity (i.e., first method), the modem processes the data transmitted and received via the 5G cell by applying the 4G channel coding scheme.

In another embodiment, when the terminal is connected through the 4G base station, the modem processes the data transmitted and received via the 4G cell by applying the 4G channel coding scheme. When the terminal is connected to the 4G base station and the 5G base station through dual-connectivity (i.e., first method), the modem obtains information indicating the channel coding scheme of the 5G cell, and it applies the 4G channel coding scheme to the data of the 4G cell and applies the 5G channel coding scheme to the data of the 5G cell. For the data of the 5G cell, the 5G cell default channel coding scheme or the 5G cell optional channel coding scheme may be applied. To determine the default channel coding scheme and the optional channel coding scheme of the 5G cell, the modem may exchange the 5G cell channel coding capability information of the terminal with the 5G base station and the 4G base station.

In another embodiment, when the terminal is connected through the 4G base station, the modem processes the data transmitted and received via the 4G cell by applying the 4G channel coding scheme. When the terminal is connected with the 5G base station through a dual radio or dual mode technology (i.e., second method), the modem obtains information indicating the 5G channel coding scheme from the 5G base station and applies the 5G channel coding scheme to the data of the 5G cell. The modem can change the 5G channel coding scheme from the 5G default channel coding scheme to the 5G optional channel coding scheme according to an indication from the 5G base station. To determine the optional channel coding scheme to be used in the modem, the modem and the 5G base station may exchange at least one of the 5G cell channel coding capability information of the terminal or the service type (e.g., eMBB, mMTC, or URLLC) information supported by the terminal.

In various embodiments, the default channel coding scheme for the data channel of the 5G cell may include at least one of an LDPC channel coding scheme, a turbo channel coding scheme, or a polar channel coding scheme. In various embodiments, the optional channel coding scheme for the data channel of the 5G cell may include at least one of an LDPC channel coding scheme, a turbo channel coding scheme, or a polar channel coding scheme.

In the above embodiments, the terminal is described as performing the system access procedure through the 4G base station, but the terminal can perform the system access procedure through the 5G base station in the same manner. That is, the terminal may perform the system access procedure with the 5G base station by using the default channel coding scheme, and may perform data transmission and reception with the 5G base station by using another channel coding scheme based on the channel coding capability of the terminal. Here, the default channel coding scheme may be notified by a signaling transmitted from the 5G base station or may be preset in the terminal.

Meanwhile, the 4G base station described above can be replaced with a base station operating in a low frequency band, for example, 6 GHz or less, 3.5 GHz, 2 GHz, or 700 MHz band.

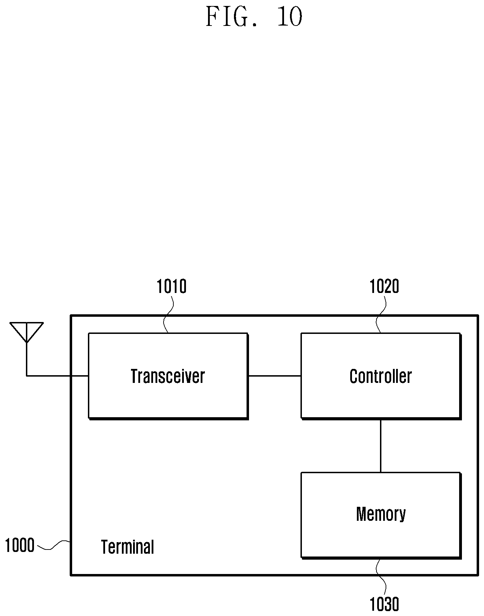

FIG. 10 is a block diagram of a terminal capable of carrying out the disclosure.

With reference to FIG. 10, the terminal 1000 may include a transceiver 1010, a controller 1020, and a memory 1030. The transceiver 1010 can transmit and receive signals to and from the 4G base station and/or the 5G base station, and the controller 1020 may control the transceiver to carry out the disclosure. For example, the controller 1020 may control the transceiver 1010 to report the channel coding capability of the terminal to the 4G base station, and may control the transceiver 1010 to receive information on the default channel coding scheme and/or the optional channel coding scheme from the 4G base station or the 5G base station. The controller 1020 may encode and decode data by applying the channel coding scheme indicated by the received channel coding information. The memory 1030 may store information on the default channel coding scheme and/or the optional channel coding scheme received from the 4G base station or the 5G base station.

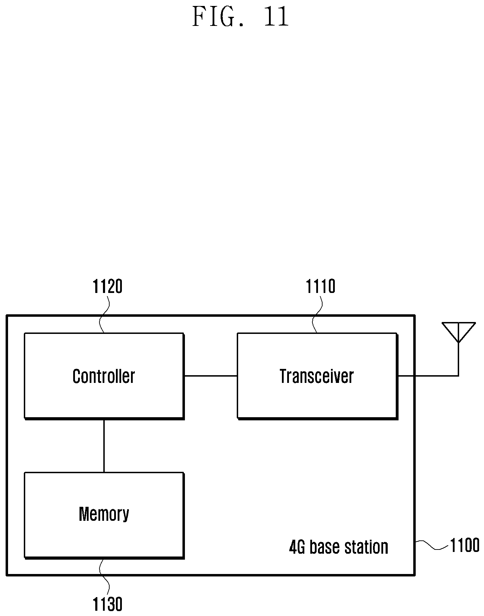

FIG. 11 is a block diagram of a 4G base station capable of carrying out the disclosure.

With reference to FIG. 11, the 4G base station 1100 may include a transceiver 1110, a controller 1120, and a memory 1130. The transceiver 1110 can transmit and receive signals to and from the terminal and the 5G base station, and the controller 1120 may control the transceiver to carry out the disclosure. For example, the controller 1120 may control the transceiver 1110 to receive the channel coding capability of the terminal, and may control the transceiver 1110 to receive information on the default channel coding scheme and/or the optional channel coding scheme from the 5G base station. The controller 1120 may control the transceiver 1110 to transmit the terminal the received information on the default channel coding scheme and/or the optional channel coding scheme. The controller 1120 can encode and decode the data to be transmitted to and received from the terminal by using the channel coding scheme applied to the 4G data. The memory 1130 may store information on the default channel coding scheme and/or the optional channel coding scheme received from the 5G base station.

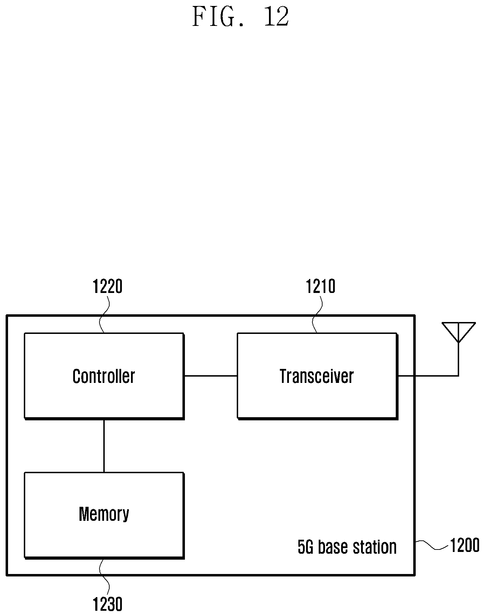

FIG. 12 is a block diagram of a 5G base station capable of carrying out the disclosure.

With reference to FIG. 12, the 5G base station 1200 may include a transceiver 1210, a controller 1220, and a memory 1230. The transceiver 1210 can transmit and receive signals to and from the terminal and the 4G base station, and the controller 1220 can control the transceiver to carry out the disclosure. For example, the controller 1220 may control the transceiver 1210 to transmit information on the default channel coding scheme and/or the optional channel coding scheme to the 4G base station, and may control the transceiver 1210 to transmit information on the default channel coding scheme and/or the optional channel coding scheme to the terminal. In addition, the controller 1210 can encode and decode the data to be transmitted to and received from the terminal by using the default channel coding scheme or the optional channel coding scheme applied to the 5G data.

The embodiments of the disclosure described above can variably provide 4G-based channel coding and 5G-based channel coding to thereby effectively support various communication scenarios (e.g., scenarios for coexistence between 4G and 5G communication systems, ultra-high-speed data support, low power support, and small packet support).

## Claims

1. A method of data transmission and reception for a terminal in a communication system, the method comprising:
encoding or decoding data to be transmitted to or received from a first base station by using a first channel coding scheme;
receiving information on a second channel coding scheme; and
encoding or decoding data to be transmitted to or received from the first base station by using the second channel coding scheme indicated by the received information,
wherein each of the first channel coding scheme and the second channel coding scheme is based on one of a turbo code, a low-density parity-check (LDPC) code, and a polar code.

2. The method of claim 1, further comprising receiving information on the second channel coding scheme from the first base station.

3. The method of claim 1, further comprising receiving information on the first channel coding scheme from the second base station.

4. The method of claim 1, wherein the first channel coding scheme is configured in advance between the terminal and the first base station.

5. A method of data transmission and reception for a first base station in a communication system, the method comprising:
encoding or decoding data to be transmitted to or received from a terminal by using a first channel coding scheme; and
encoding or decoding data to be transmitted to or received from the terminal by using a second channel coding scheme,
wherein the second channel coding scheme is notified to the terminal via information indicating the second channel coding scheme,
wherein each of the first channel coding scheme and the second channel coding scheme is based on one of a turbo code, a low-density parity-check (LDPC) code, and a polar code.

6. The method of claim 5, further comprising transmitting information on the second channel coding scheme to the terminal.

7. The method of claim 5, wherein information on the first channel coding scheme is transmitted from a second base station to the terminal.

8. The method of claim 5, wherein the first channel coding scheme is configured in advance between the terminal and the first base station.

9. A terminal capable of data transmission and reception in a communication system, comprising:
a transceiver configured to transmit and receive signals to and from a first base station and a second base station; and
a controller configured to control encoding or decoding data to be transmitted to or received from the first base station by using a first channel coding scheme, receiving information on a second channel coding scheme, and encoding or decoding data to be transmitted to or received from the first base station by using the second channel coding scheme indicated by the received information,
wherein each of the first channel coding scheme and the second channel coding scheme is based on one of a turbo code, a low-density parity-check (LDPC) code, and a polar code.

10. The terminal of claim 9, wherein the controller is configured to receive information on the second channel coding scheme from the first base station.

11. The terminal of claim 9, wherein the controller is configured to receive information on the first channel coding scheme from the second base station.

12. The terminal of claim 9, wherein the first channel coding scheme is configured in advance between the terminal and the first base station.

13. A first base station capable of data transmission and reception in a communication system, comprising:
a transceiver configured to transmit and receive signals to and from a second base station and a terminal; and
a controller configured to control encoding or decoding data to be transmitted to or received from the terminal by using a first channel coding scheme, and encoding or decoding data to be transmitted to or received from the terminal by using a second channel coding scheme,
wherein the second channel coding scheme is notified to the terminal via information indicating the second channel coding scheme,
wherein each of the first channel coding scheme and the second channel coding scheme is based on one of a turbo code, a low-density parity-check (LDPC) code, and a polar code.

14. The first base station of claim 13, wherein the controller is configured to transmit information on the second channel coding scheme to the terminal.

15. The first base station of claim 13, wherein information on the first channel coding scheme is transmitted from the second base station to the terminal.
